(19) Europäisches Patentamt
European Patent Office
Office européen des brevets

(11) Numéro de publication : **0 369 848 B1**

# (12) FASCICULE DE BREVET EUROPEEN

(45) Date de publication du fascicule du brevet : **07.01.93 Bulletin 93/01**

(51) Int. Cl.$^5$ : **C03C 25/02**

(21) Numéro de dépôt : **89402936.2**

(22) Date de dépôt : **25.10.89**

## (54) Liant et encollagé à base de celui-ci pour fibres minérales.

(30) Priorité : **27.10.88 FR 8814008**

(43) Date de publication de la demande : **23.05.90 Bulletin 90/21**

(45) Mention de la délivrance du brevet : **07.01.93 Bulletin 93/01**

(84) Etats contractants désignés : **AT BE CH DE ES FR GB IT LI LU NL SE**

(56) Documents cités :
**DE-B- 1 111 141**
**US-A- 3 449 281**
**PATENT ABSTRACTS OF JAPAN, vol. 12, no. 248 (C-511), 13 juillet 1988; & JP-A-63 037 137 (TORAY IND. INC.)**

(73) Titulaire : **ISOVER SAINT-GOBAIN**
**Les Miroirs 18, avenue d'Alsace**
**F-92400 Courbevoie (FR)**

(72) Inventeur : **Gicquel, Bernard**
**8, Allée des Bouleaux**
**F-95350 Saint-Brice Sous Forêt (FR)**

(74) Mandataire : **Menes, Catherine et al**
**SAINT-GOBAIN RECHERCHE 39, Quai Lucien Lefranc**
**F-93300 Aubervilliers (FR)**

**EP 0 369 848 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a trait à l'utilisation d'un nouveau type de résine synthétique thermodurcissable pour la production de produits à base de fibres minérales, notamment de fibres de verre, tels notamment les mats de fibres minérales destinés à l'isolation thermique et/ou phonique des bâtiments.

La plupart des matériaux isolants à base de fibres minérales comportent un liant qui assure la tenue mécanique du matériau c'est-à-dire un lien entre les fibres. Ce liant doit être dispersé de façon homogène sur les fibres ; pour éviter que ne se forment des îlots de fibres entourées d'une gangue de liant dans un ensemble de fibres non liées plus cassantes et donc plus poussiéreuses, le liant est toujours employé à l'état dilué dans un encollage.

Il est connu d'utiliser des résines thermodurcissables phénoplastes (phénol-formol) ou aminoplastes (mélamine formol ou urée-formol). Les liants les plus usités sont des résols, produits de la condensation - en présence de catalyseurs alcalins ou alcalino-terreux - de phénols, possèdant des emplacements ortho et para vacants, et d'aldéhydes (principalement de formaldéhyde). Ces résines entrent dans une composition d'encollage qui contient de plus de l'eau, agent de dilution, de l'urée qui sert à diminuer le taux de formol libre et agit également comme liant, et divers additifs tels que de l'huile, de l'ammoniaque, des colorants et éventuellement des charges.

Les critères de sélection d'un liant sont extrêmement nombreux et relèvent de différents ordres, sans perdre de vue toutefois qu'un liant doit avant tout adhérer correctement au verre.

Tout d'abord, il est indispensable que le liant soit compatible rhéologiquement avec le procédé de fabrication des fibres. Sans entrer dans des détails ici hors de propos, indiquons que les fibres de verre sont usuellement produites au moyen d'un centrifugeur dont l'axe est orienté verticalement et dans lequel on introduit un jet continu de verre en fusion. Le verre est projeté vers la paroi périphérique du centrifugeur dont il s'échappe sous forme de filaments par une multiplicité de petits orifices ; lesdits filaments étant étirés et entraînés vers le bas au moyen d'un courant gazeux à haute température et haute pression. Les fibres obtenues sont recueillies sur un convoyeur perméable aux gaz et forment ainsi un matelas plus ou moins épais, en fonction de la vitesse du convoyeur.

L'encollage doit idéalement gainer parfaitement chaque fibre ainsi produite ; il est donc préférable de pulvériser la composition d'encollage lorsque les fibres sont encore unitaires, c'est-à-dire avant que ne se constitue le matelas. En conséquence, l'encollage est pulvérisé dans la hotte de réception des fibres, en-dessous des brûleurs générant le courant gazeux d'étirage. Le corollaire à cette option est l'interdiction d'utiliser des solvants organiques inflammables et/ou polluants, pour la formulation de l'encollage, le risque d'incendie et/ou de pollution dans la hotte de réception étant trop important. De plus, la résine servant de liant ne doit pas polymériser trop rapidement avant la mise en forme désirée.

D'autre part, si cette polymérisation ne doit pas être trop rapide, elle doit pouvoir toutefois ne pas être trop longue, or sur ce point les résines employées selon l'art ne sont pas parfaitement satisfaisantes car la polymérisation complète n'est achevée en un temps compatible avec des vitesses de production élevées qu'après un séjour dans une étuve à haute température (de l'ordre de 250°C) grande consommatrice d'énergie.

Enfin, la résine et son procédé de mise en oeuvre doivent être d'un coût relativement modéré, compatible avec celui du fibrage du verre et ne pas conduire directement ou indirectement à la formation d'effluents toxiques ou polluants. A cet égard, la demanderesse a choisi de sélectionner des résines qui ne nécessitent pas de formol pour leur fabrication, et qui de plus ne libèrent pas des quantités significatives de formol lorsqu'elles se décomposent sous l'effet d'une trop forte chaleur. Dans de telles conditions, le produit est bien sûr non toxique et de plus ne dégage pas d'odeur désagréable s'il vient à brûler.

Dans une industrie connexe à l'industrie des fibres de verre isolantes, à savoir dans l'industrie des fibres de verre de renforcement, il est connu de gainer des fibres de verre avec des résines époxy. L'ensimage a pour double objet la protection individuelle des fibres qui sont ainsi moins sensibles au frottement et un meilleur accrochage de la matière plastique pour laquelle les fibres jouent le rôle de renforcement. Mais dans ce cas, on ne cherche pas à obtenir de liaison entre fibres de verre et rien ne permettait de conclure à un collage verre-verre suffisamment solide (pour une bonne résistance mécanique) et ponctuel (pour une totale reprise d'épaisseur).

Après de nombreux essais industriels, la demanderesse a obtenu des résultats très satisfaisants avec un encollage, destiné à des fibres dites d'isolation, à base d'une résine époxy du type éther glycidylique,véhiculable en milieu aqueux et d'un durcisseur aminé non volatil, comportant comme additifs calculés en parts pondérales pour 100 parts de résine sèche - 0,1 à 2 parts de silane et 0 à 15 parts d'une huile minérale.

Par véhiculable en milieu aqueux, on entend une résine directement dispersable dans de l'eau ou susceptible d'être émulsionnée sans ou avec addition d'un agent émulsifiant.

Les résines époxy préférées selon l'invention ont un indice moyen de polymérisation n compris entre 0 et

1 et de préférence inférieur à 0,2, n étant égal au nombre moyen de groupes bisphénol A supplémentaires par molécule d'éther glycidylique obtenue par condensation d'épichlorhydrine

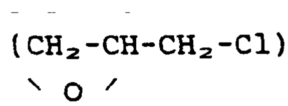

et de bis-phénol A ($HO-C_6H_4-C(CH_3)_2-C_6H_4-OH$), la réaction de condensation menée dans des conditions strictement stoechiométriques (2 moles d'épichlorhydrine pour 1 mole de bis-phénol A) conduisant à un éther glycidylique d'indice n= 0. Les résines à faible indice de polymérisation - et donc à chaines plus courtes - forment avantageusement un réseau réticulé plus dense dont on constate expérimentalement qu'il conduit à des produits de plus grande résistance mécanique. Toutefois, une résine epoxy d'indice n= 0 n'est pas préférée car elle a tendance à cristalliser au stockage et est de plus beaucoup plus difficile à synthétiser car plus pure et de ce fait plus onéreuse.

Par durcisseur aminé non volatil, on entend un durcisseur dont le point éclair est supérieur à 180°C; en effet dans ces conditions, on n'observe pas d'auto-inflammation dans la hotte de réception des fibres où est pulvérisé le liant.

A titre de durcisseur aminé, on peut utiliser des polyamines primaires, secondaires, aliphatiques, cycloaliphatiques, aromatiques ou araliphatiques, des polyaminoamides. De préférence, la masse molaire équivalente NH, c'est-à-dire la quantité de produit nécessaire pour obtenir l'équivalent d'une liaison amine-hydrogène par mole, est choisie inférieure à 100 g ce qui correspond à un nombre important de sites réactifs par molécule.

En outre, on peut utiliser un agent catalytique par exemple du type amine tertiaire.

Indice de polymérisation et masse molaire équivalente NH sont deux conditions assez symétriques et il est possible de compenser - au moins dans une certaine mesure - un assez mauvais indice de polymérisation par l'emploi d'un durcisseur de masse molaire équivalente NH adaptée et réciproquement.

Sont assez généralement exclus du cadre de la présente invention les durcisseurs appartenant au groupe des polyacides et anhydrides d'acide, ceci en raison de leur très faible solubilité dans l'eau qui pose des problèmes de mise en oeuvre important et en raison de leur caractère corrosif doublé d'un coût élevé. Sont également exclues les résines phénoliques et aminoplastes - qui dégagent du formol lors de leur cuisson et les durcisseurs du type urée, mélamine, guanamine - qui sont peu solubles dans l'eau.

Par contre, on peut utiliser des durcisseurs du type polyamines ou amino-polyamides, produits d'un coût moyen, dont les conditions de mises en oeuvre sont relativement simples et qui ne dégagent pas de formol lors de la cuisson. Par contre ce type de durcisseur présente l'inconvénient d'une réaction à relativement basse température ce qui entraîne un risque de prégélification. De plus, certains sont corrosifs et à chaud on a un fort dégagement de composés aminés d'où un danger de pollution.

Ces inconvénients ne se retrouvent pas avec les durcisseurs du type dicyane diamides (DCN) d'un coût faible, non toxiques, non volatils et non corrosisf, légèrement solubles dans l'eau et qui surtout réagissent presque exclusivement à chaud, un matelas imprégné pouvant être gardé près d'un an sans qu'on n'observe de durcissement de la résine.

La résine pulvérisée sur les fibres ne doit pas durcir avant le formage du mat, autrement dit la prégélification doit être aussi faible que possible. Il a été constaté expérimentalement que cette condition est remplie si le temps de gel de la résine époxy est supérieur à 25 minutes à 100°C ; le temps de gel étant par définition le temps nécessaire à une température donnée pour qu'une certaine quantité de résine atteigne une viscosité fixée à 3000 centipoises. Avec des résines phénoplastes usuelles, un temps de gel de 25 minutes est jugé insuffisant et on préfère des résines dont le temps de gel est supérieur à 1 heure ce qui constitue une limitation importante. Avec les résines époxy, des temps de gel beaucoup plus courts sont de manière surprenante admissibles en utilisant éventuellement des résines plus diluées. Il semble en effet que les systèmes eau-résine époxy soient moins stables dans l'étuve que les systèmes eau-résines phénoplastes ce qui permet d'éliminer plus facilement l'eau.

L'encollage selon l'invention ne nécessite pas de formol pour sa préparation et on ne constate pas non plus de dégagement significatif de formol dans l'étuve. De plus, la polymérisation totale peut être conduite à une température inférieure à 220°C ce qui diminue le risque de production dans l'étuve de produits polluants qu'il est ensuite nécessaire d'éliminer notamment par pyrolyse.

D'autres caractéristiques de l'invention sont exposées en détail ci-après en référence aux tests comparés effectués sur 3 résines A, B, C répondant aux formulations suivantes :

**RESINE A:** résine formo-phénolique (résine standard). En partie de sec : 55 % (en poids) de résine formol - dont le rapport phénol-formaldéhyde est égal à 3,2, à catalyse minérale d'une

viscosité à 20°C inférieure à 20 mPa - et 45 % d'urée.

**RESINE B**: résine époxy bi-composant à base de diglycidyléther du bisphénol A (Eurepox 756, marque déposée de la Société SCHERRING ; indice époxy 0,54 0,02 (mole époxy pour 100 g) ; équivalent époxy 178 -192 (g/mole) ; indice moyen de polymérisation n = 0,1.

**RESINE C**: résine époxy bi-composant Néoxyl 965, marque déposée de la société SAVID, indice époxy o,33 (mole époxy pour 100 g) ; équivalent époxy 300 g/mole, indice moyen de polymérisation n = 0,91.

**DURCISSEUR D**: Polyamine à l'eau, Euredur 36, marque déposée de la société SCHERRING ; point éclair 190°C, extrait sec 80 % ; masse équivalente NH 132 g (soit un groupe actif NH pour 132 g de produit sec).

**DURCISSEUR E**: Polyamine aliphatique XIONEL SP 3288 marque déposée de la société SAVID ; masse équivalente NH 57 g.

**DURCISSEUR F**: Dicyane diamide associée à un accélérateur de polymérisation (de préférence une amine tertiaire par exemple du type tri (déméthylaminométhyl) phénol).

Sauf précisions contraires, les résines sont mélangées aux durcisseurs dans un rapport pondéral de 1 groupe NH pour 1 groupe équivalent époxy.

## COMPORTEMENT VISCOSIMETRIQUE

L'encollage doit avoir une bonne compatibilité rhéologique avec le procédé de fabrication des fibres. Il faut notamment éviter que ne se produise une gélification de la résine dans la hotte de réception des fibres, avant le formage du mat afin d'éviter la formation d'amas fibreux non homogènes.

Pour estimer le comportement viscosimétrique dans un récipient thermostaté à 100°C, on place 10 g de résine en solution à 30 % dans de l'eau désionisée. On plonge une sonde viscosimétrique dans le récipient et on mesure le temps nécessaire pour que la viscosité atteigne 3000 centipoises.

- Essai n° 1 (résine A) : 60 ′
- Essai n° 2 (résine B + durcisseur D) : 27′
- Essai n° 3 (résine C + durcisseur E) : 39′
- Essai n° 3′(résine B + durcisseur F) : 49′

Les temps de gel obtenus lors des essais 2 et 3 sont donc comparativement à l'essai n° 1 très courts, mais on constate de façon surprenante que ceci n'a pas d'effets significatifs, sur ligne à condition éventuellement d'accroître les quantités d'eau utilisées.

## TEST SUR LIGNES

L'encollage selon l'invention est destiné à être pulvérisé sur des fibres de verre dites d'isolation c'est-à-dire obtenues par des procédés aérodynamiques avec un étirage par un courant gazeux à haute pression et haute température, à opposer aux fibres dites textiles obtenues par étirage mécanique de filaments produits par une filière. L'encollage convient plus particulièrement aux fibres obtenues selon le procédé TEL, le verre fondu étant ntroduit à l'intérieur d'une assiette de centrifugation tournant à grande vitesse dont il s'échappe sous forme de filaments par une série d'orifices pratiqués sur la paroi de l'assiette, les filaments étant étirés sous forme de fibres par un courant gazeux à grande vitesse et haute température, généré par des brûleurs entourant l'assiette. L'encollage est avantageusement pulvérisé sur les fibres avant qu'elles ne soient recueillies par un organe de réception. Les encollages sont préparés par dispersion de la résine dans une quantité d'eau calculée de façon à amener la proportion d'extrait sec à 10 %, puis ajout d'un silane. Pour la résine standard, on ajoute également à l'encollage 3 parts d'amnoniaque pour 100 parts de résine formophénolique, conformément à la pratique usuelle.

On a tout d'abord procédé à différents essais sur une ligne de laboratoire produisant des fibres de verre avec une tirée de 12 kg/heure. Les caractéristiques du poste de fibrage sont conformes aux enseignements du brevet FR-2 223 318 et les fibres ainsi produites sont comparables à celles obtenues industriellement. Dans la hotte de fibrage, on pulvérise sur les fibres un encollage à 2 % de résine et dans de l'eau désionisée. On obtient des carrés de 450 mm de côté et de 50 mm d'épaisseur avec une teneur en liant après polymérisation d'environ 5 %.

## RESISTANCE TRACTION

La résistance traction (ou RT donnée en gf/g) est mesurée sur des éprouvettes en forme d'anneaux étirées par deux tiges intérieures, conformément à la norme ASTM C 686-71T. Les résultats des mesures sont rassemblés au **TABLEAU I** Le vieillissement est simulé par le passage de l'éprouvette pendant 30 minutes dans un autoclave à 107°C, sous pression autogène d'eau.

**TABLEAU I**

| Essais : | 4 | 5 | 6 | 6' |
|---|---|---|---|---|
| Résine du type : | A | B | C | B |
| Durcisseur du type : | - | D | E | F |
| RT après préparation (en gf/f) : | 600 | 740 | 641 | 750 |
| RT après vieillissement (en gf/f) : | 525 | 400 | 290 | 470 |
| Pourcentage de liant dans le produit fini : | 5 % | 6 % | 5,7% | 5,8% |

Les résistances mécaniques après vieillissement sont légèrement plus faibles avec les résines selon l'invention mais restent toutefois satisfaisantes. L'influence de l'indice de polymérisation n de la résine époxy et de la masse molaire équivalente NH du durcisseur aminé est exemplifiée par les essais suivants (effectués avec une addition systématique de 0,5 % de silane).

Les formulations des résines utilisées pour les essais 7 à 10 du **TABLEAU II** (RT en g/f) sont les suivantes :

Essai n° 7 : résine B + durcisseur D,
Essai n° 8 : résine C + durcisseur E,
Essai n° 9 : résine C + durcisseur D,
Essai n° 10 : résine B + durcisseur E.

**TABLEAU II**

| Essai n° | 7 | 8 | 9 | 10 |
|---|---|---|---|---|
| RT après préparation | 650 | 617 | 432 | 697 |
| RT après vieillissement | 528 | 526 | 326 | 574 |
| % liant | 4,6 | 4,65 | 4,3 | 4,0 |

Les essais 5, 7 et 10 effectués avec la résine présentant le plus petit indice de polymérisation donnent les meilleurs résultats après vieillissement. L'essai 8 (et aussi l'essai 6) indique qu'un durcisseur dont la masse molaire équivalente NH est élevée associé à une résine à indice de polymérisation élevé conduit à des produits initialement très corrects, mais dont la résistance mécanique se dégrade beaucoup.

Les plus mauvais résultats sont obtenus avec l'essai 9 correspondant à une résine époxy à indice de polymérisation élevé et un durcisseur à masse molaire équivalente NH faible.

Le produit préféré selon l'invention (essai 10) a un excellent comportement après préparation et après vieillissement.

Par ailleurs une quantité adéquate de silane permet une optimisation des propriétés comme le montrent les essais 11 à 14 du **TABLEAU III** établi en faisant varier la quantité de silane dans différents échantillons

préparés à partir d'une résine du type B, et un durcisseur du type D.

**TABLEAU III**

| essai | % silane | % liant | RT après préparation | RT après autoclave |
|---|---|---|---|---|
| 11 | 0 | 6.6 | 707 | 258 |
| 12 | 0.5 | 5.6 | 724 | 392 |
| 13 | 1.0 | 5.8 | 692 | 395 |
| 14 | 1.5 | 6.5 | 712 | 422 |

L'addition de silane a essentiellement pour effet une amélioration du vieillissement du produit alors qu'à taux de liant voisin la résistance à la traction (donnée ici en gf/g) mesurée immédiatement après la préparation du produit est pratiquement constante. Les meilleurs résultats sont obtenus pour un pourcentage de silane compris entre 0.5 ou 1 %. Dans le cas des matériaux en fibres d'isolation, il semble donc que le silane agisse essentiellement en empêchant l'insertion de molécules d'eau entre le verre et la résine et non comme un promoteur de l'adhérence verre- résine.

Pour ce qui concerne l'influence du rapport de la résine époxy et de son durcisseur on a à nouveau opéré avec une résine du type B et un durcisseur du type D, en additionnant 0,5 % de silane conformément à l'enseignement des essais précédents. Les résultats sont récapitulés au **TABLEAU IV** suivant.

**TABLEAU IV**

| n° | % résine B | % durcisseur C | % liant | RT | RT autoclave |
|---|---|---|---|---|---|
| 15 | 45 | 55 | 6.2 | 653 | 336 |
| 16 | 53 | 47 | 6.3 | 741 | 400 |
| 17 | 58 | 42 | 5.4 | 723 | 346 |
| 18 | 63 | 37 | 6.2 | 686 | 388 |
| 19 | 70 | 30 | 5.2 | 653 | 316 |

Les meilleurs résultats (à taux de liant identique) sont obtenus lorsque le rapport du nombre de groupes époxy au nombre de groupes NH équivalents du durcisseur est voisin du rapport stoechiométrique (soit 53/43 en masse pour les résines des essais 15 à 19).

On a ensuite vérifié ces premiers résultats en réalisant 9 échantillons dont deux échantillons de référence à base d'une résine standard. Ces échantillons ont été obtenus sur une ligne de production pilote dans des conditions très proches des conditions industrielles. Dans cette ligne, les fibres de verre sont conformées selon le procédé dit "TEL" suivant l'enseignement du brevet EP-91 866. La tirée de verre est de 20 tonnes par jour. Les encollages sont délivrés par une pompe doseuse avec une quantité d'eau désionisée permettant de ramener la proportion d'extrait sec à 10 %. Ils comportent comme additif un silane et à titre d'adoucissant et d'agent anti-poussière de 0 à 10 % d'une huile minérale. On peut aussi utiliser d'autres types d'huile du type de l'huile de lin, l'huile de soja, l'huile de carthame, les huiles de poissons ou l'huile des bois de Chine ou des acides gras non siccatifs tels par exemple des huile de coprah, de palme ou l'acide stéarique. Les encollages sont pulvérisés dans la hotte de fibrage, sous une pression d'air de 1,5 bar ; on pulvérise simultanément une certaine quantité d'eau supplémentaire encore appelée overspray de façon à ramener la proportion d'extrait sec par rapport à la quantité finale d'eau à une valeur comprise entre 5 et 8 % et de préférence comprise entre 6,5 et 7,5 %. Conformément aux enseignements des mesures viscosimétriques, les essais avec la résine selon l'invention ont été menés avec une quantité d'eau supplémentaire supérieure de 50 % à celle utilisée pour un encollage standard. La polymérisation s'effectue dans une étuve ventilée où le mat de fibres de verre pénètre entre deux conformateurs qui lui imposent une épaisseur donnée, supérieure à l'épaisseur nominale, c'est-à-dire à l'épaiseur minimale garantie à l'utilisateur.

Ci-après sont détaillés les conditions de préparation des différents échantillons, le taux de liant mesuré après polymérisation et les caractéristiques dimensionnelles (grammage, densité, épaisseur effective du produit).

**Echantillon N° 20**

- Formulation de l'encollage :
  . résine témoin formo-phénolique
  du type A : 100 parts
  . % silane : 1 part
  . % huile : 10 parts
  . % amnoniaque liquide : 3 parts
- Débit :
  . encollage (kg/h) : 540
  . overspray (kg/h) : 200
- Température du produit dans l'étuve : 250°C
- Pourcentage de liant dans le produit fini : 5,04
- Grammage (g/m$^2$) : 878
- Densité (kg/m$^3$) : 10,97
- Epaisseur (mm) : 129,2

**Echantillon N° 21**

- Formulation de l'encollage :
  . résine B, durcisseur D dans un rapport : 55-45
  . % silane : 0,5
- Débit :
  . encollage (kg/h) : 640
  . overspray (kg/h) : 300
- Température du produit dans l'étuve : 250°C
- Pourcentage de liant dans le produit fini : 5,88
- Grammage (g/m$^2$) : 899
- Densité (kg/m$^3$) : 11,24
- Epaisseur (mm) : 129,3

**Echantillon N° 22**

- Formulation de l'encollage :
  . résine B, durcisseur D dans un rapport : 55-45
  . % silane : 0,5
- Débit :
  . encollage (kg/h) : 840
  . overspray (kg/h) : 300
- Température du produit dans l'étuve : 250°C
- Pourcentage de liant dans le produit fini : 5,06
- Grammage (g/m$^2$) : 892
- Densité (kg/m$^3$) : 11,15
- Epaisseur (mm) : 128,7

**Echantillon N° 23**

- Formulation de l'encollage :
  . résine B, durcisseur D dans un rapport : 55-45
  . % silane : 0,5
- Débit :
  . encollage (kg/h) : 840
  . overspray (kg/h) : 300
- Température du produit dans l'étuve : 250°C

- Pourcentage de liant dans le produit fini : 5,12
- Grammage (g/m$^2$) : 897
- Densité (kg/m$^3$) : 11,21
- Epaisseur (mm) : 129,6

**Echantillon N° 24**

- Formulation de l'encollage :
  . résine témoin formo-phénolique du type A : 100 parts
  . % silane : 1 part
  . % huile : 10 parts
  . % ammnoniaque liquide: 3 parts
- Débit :
  . encollage (kg/h) : 540
  . overspray (kg/h) : 200
- Température du produit dans l'étuve : 218°C
- Pourcentage de liant dans le produit fini : 4,5
- Grammage (g/m$^2$) : 916
- Densité (kg/m$^3$) : 11,4
- Epaisseur (mm) : 129,5

**Echantillon N° 25**

- Formulation de l'encollage :
  . résine B, durcisseur D dans un rapport : 55-45
  . % silane : 0,5
- Débit :
  . encollage (kg/h) : 840
  . overspray (kg/h) : 300
- Température du produit dans l'étuve : 216°C
- Pourcentage de liant dans le produit fini : 5,8
- Grammage (g/m$^2$) : 916
- Densité (kg/m$^3$) : 12,0
- Epaisseur (mm) : 129,1

**Echantillon N° 26**

- Formulation de l'encollage :
  . résine B, durcisseur D dans un rapport : 55-45
  . % silane : 0,5
  . % huile : 9,5
- Débit :
  . encollage (kg/h) : 840
  . overspray (kg/h) : 300
- Température du produit dans l'étuve : 218°C
- Pourcentage de liant dans le produit fini : 6,5
- Grammage (g/m$^2$) : 908
- Densité (kg/m$^3$) : 11,3
- Epaisseur (mm) : 128,2

**Echantillon N° 27**

- Formulation de l'encollage :
  . résine B, durcisseur D dans un rapport : 55-45
  . % silane : 0,5
  . % huile : 9,5
- Débit :

. encollage (kg/h) : 840
. overspray (kg/h) : 300
- Température du produit dans l'étuve : 200°C
- Pourcentage de liant dans le produit fini : 6,2
- Grammage (g/m$^2$) : 898
- Densité (kg/m$^3$) : 11,2
- Epaisseur (mm) : 129,0

**Echantillon N° 28**

- Formulation de l'encollage :
  . résine B, durcisseur D dans un rapport : 50-50
  . % silane : 0,5
  . % huile : 9,5
- Débit :
  . encollage (kg/h) : 840
  . overspray (kg/h) : 300
- Température du produit dans l'étuve : 193°C
- Pourcentage de liant dans le produit fini : 6,0
- Grammage (g/m$^2$) : 911
- Densité (kg/m$^3$) : 11,4
- Epaisseur (mm) : 131,3

**ECHANTILLON N° 29**

- Formulation de l'encollage :
  . résine C, durcisseur E dans un rapport : 84-16
  . % silane : 0,5
- Débit :
  . encollage (kg/h) : 840
  . overspray (kg/h) : 300
- Température du produit dans l'étuve : 240°C
- Pourcentage de liant dans le produit fini : 5,95
- Grammage (g/m$^2$) : 920
- Densité (kg/m$^3$) : 11,5
- Epaisseur (mm) : 127,9

**ECHANTILLON N° 30**

- Formulation de l'encollage :
  . résine C, durcisseur E dans un rapport : 84-16
  . % silane : 0,5
- Débit :
  . encollage (kg/h) : 740
  . overspray (kg/h) : 200
- Température du produit dans l'étuve : 240°C
- Pourcentage de liant dans le produit fini : 6,15
- Grammage (g/m$^2$) : 899
- Densité (kg/m$^3$) : 11,23
- Epaisseur (mm ) : 127,5

L'encollage selon l'invention permet donc l'obtention de produits qui ne diffèrent pratiquement pas des produits standards du point de vue de leurs caractéristiques dimensionnelles (densité et épaisseur) et ceci sans modification importante du procédé de fabrication.

Les échantillons 20 et 24 obtenus avec un encollage standard sont jaunes en l'absence d'additifs colorants spécifiques. Les échantillons 21, 22 et 23 sont très légèrement bruns en revanches les échantillons 25 à 28 sont eux de couleur blanche, il y a donc intérêt à maintenir la température du produit dans l'étuve à environ 220°C, ce qui permet une bonne polymérisation du liant et de plus on peut choisir exactement la couleur définitive que l'on souhaite conférer au produit. D'autre part le risque de dégagement d'émanations polluantes

est moindre si la température de l'étuve est faible.

Pour son conditionnement, en sortie d'étuve, le produit est comprimé avec un taux de compression égal par définition au rapport de l'épaisseur nominale à l'épaisseur sous compression. On a testé les échantillons pour des taux de compression égaux à 4 ou 6. Pour vérifier la bonne tenue dimensionnelle d'un échantillon, on indique l'épaisseur après déballage calculée en pourcentage de l'épaisseur nominale ; ce pourcentage, noté reprise d'épaisseur, peut donc éventuellement être supérieur à 100.

Reprise d'épaisseur 24 heures après fabrication pour un taux de compression de 6 (respectivement de 4) :

. Echantillon n° 21: 125,8 (133,9)
. Echantillon n° 22 : 126,0 (135,1)
. Echantillon n° 23 : 104,7 (119,7)
. Echantillon n° 24 : 143,1
. Echantillon n° 25 : 127,5
. Echantillon n° 26 : 129,4
. Echantillon n° 27 : 129,2
. Echantillon n° 28 : 131,7
. Echantillon n° 29 : 141,8 (137,2)
. Echantillon n° 30 : 143,7 (136,4)

Reprise d'épaisseur 12 jours après fabrication pour un taux de compression de 6 (respectivement de 4) :

. Echantillon n° 20 : 135,8 (140,7)
. Echantillon n° 21 : 110,7 (124,6)
. Echantillon n° 22 : 113,3 (122,7)
. Echantillon n° 23 : 105,3 (106,6)
. Echantillon n° 29 : 137,0 (133,6)
. Echantillon n° 30 : 143,7 (132,5)

La résistance mécanique des produits a été ensuite testée immédiatement après la préparation des échantillons, après 24 heures puis 12 jours après, enfin on a également réalisé un test de vieillissement artificiel en autoclave.

**(TABLEAU V)**

**TABLEAU V**

| N° | Résistance traction (en gf/g) après | | | |
|---|---|---|---|---|
| | préparation | 24 heures | 12 jours | autoclave |
| 20 | 292 | | 257 | 177 |
| 21 | 293 | 279 | 251 | 146 |
| 22 | 273 | 281 | 266 | 210 |
| 23 | 295 | | 272 | 241 |
| 24 | 284 | 264 | | 174 |
| 25 | 257 | 260 | | 186 |
| 26 | 248 | 248 | | 222 |
| 27 | 253 | 241 | | 165 |
| 28 | 268 | 262 | | 197 |
| 29 | 269 | 232 | 217 | 207 |
| 30 | 264 | 247 | 232 | 185 |

Les produits selon l'invention ont après préparation une résistance traction voisine de celle des produits standards par contre, ils vieillissent un peu mieux.

Ces essais démontrent la possibilité de réaliser des produits en fibres de verre liées destinées notamment à l'isolation thermique et/ou phonique des bâtiments, notamment des produits légers, en substituant à l'encollage standard l'encollage selon l'invention, et ceci sans modifier les paramètres de fonctionnement de la ligne de production des fibres de verre, si ce n'est pour ce qui concerne la température de l'étuve dont le point de consigne est abaisser de l'ordre de 30 à 50°C, ce qui permet de réaliser des économies d'énergie.

Il a été de plus procédé à 3 essais supplémentaires destinés à vérifier la faisabilité d'un encollage contenant un durcisseur du type F (dicyane diamide), auquel est associé un accélérateur du type 2, 4, 6,tri(diméthylaminométhyl) phénol ; produit commercialisé sous la marque DMP-30 par la Société de droit français ROHM and HAAS FRANCE.

Ces 3 essais ont été réalisés sur la ligne industrielle décrite précédemment (tirée de verre de 20 tonnes par jour, sans overspray). Les formulations d'encollage suivantes ont été utilisées :

**ECHANTILLON N° 31**

- Formulation de l'encollage :
  - . résine témoin du type A : 100 parts
  - . silane : 0,3 part
  - . huile : 9,5 parts
  - . amnoniaque liquide : 6 parts
  - . sulfate d'ammonium : 3 parts

**ECHANTILLON N° 32**

- Formulation de l'encollage :
  - résine B : 72 parts
  - durcisseur E : 28 parts
  - silane : 0,5 part
  - huile : 12 parts

**ECHANTILLON N° 33**

- Formulation de l'encollage :
  - résine B : 88 parts
  - durcisseur F : 12 parts,
  - accélérateur : 1,2
  - silane : 0,5 part
  - huile : 12 parts

Les valeurs caractéristiques des produits obtenus sont récapitulés au **TABLEAU VI** ci-après.

| Essai | Micronaire | Grammage | densité | Epaisseur |
|---|---|---|---|---|
| 31 | 3,35 | 896 | 11,2 | 125,6 |
| 32 | 3,50 | 899 | 11,2 | 128,1 |
| 33 | 3,60 | 927 | 11,6 | 158,5 |

| Essai | Résistance traction (en gf/g)/ Reprise d'épaisseur (en %) | | | |
|---|---|---|---|---|
| | 24 heures | 12 jours | 30 jours | 90 jours |
| 31 | 300/141,8 | 272/137,5 | 282/138,1 | 227/130,8 |
| 32 | 218/140,7 | 224/136,4 | 238/137,0 | 260/131,3 |
| 33 | 232/141,2 | 223/140,1 | 248/138,5 | 217/137,0 |

Le durcisseur à base de DCN apporte toute satisfaction. En effet, la reprise d'épaisseur est égale à celle observée pour le produit standard après fabrication et est même meilleure après vieillissement. La résistance traction est par contre un peu plus faible après vieillissement, mais est maintenue tout de même à une valeur élevée. Notons de plus en comparant les essais 32 et 33 que les durcisseurs E et F donnent des résultats très semblables, mais avec un prix de revient divisé par 2 pour l'encollage contenant le durcisseur F, ce qui en fait sans contestation le produit préféré de l'invention.

## Revendications

1. Encollage pour fibres de verre dites d'isolation à base d'une résine époxy du type éther glycidylique dispersable dans de l'eau, d'un durcisseur aminé dont le point éclair est supérieur à 180°C et d'additifs (en parts calculées pour 100 parts de résine sèche) notamment 0,1 à 2 % de silane et 0 à 15 % d'une huile minérale.

2. Encollage selon la revendication 1, **caractérisé en ce que** la résine époxy est un éther glycidylique d'indice de polymérisation n inférieur à 1 et de préférence inférieur à 0,2.

3. Encollage selon la revendication 2, **caractérisé en ce que** l'indice de polymérisation n est strictement supérieur à 0.

4. Encollage selon l'une des revendications 1 à 3, **caractérisé en ce que** la masse molaire équivalente NH du durcisseur est inférieure à 100 g.

5. Encollage selon l'une des revendications 1 à 4, **caractérisé en ce que** le durcisseur est ajouté à la résine époxy dans un rapport sensiblement identique au rapport stoechiométrique.

6. Encollage selon l'une des revendications 1 à 5, **caractérisé en ce que** le couple résine-durcisseur présente un temps de gel supérieur à 25 minutes.

7. Encollage selon l'une des revendications 1 à 6, **caractérisé en ce que** le durcisseur est à base de dicyane diamide (DCN).

8. Procédé de traitement de fibres de verre dites d'isolation obtenues selon des procédés aérodynamiques avec étirage par des courants gazeux à haute température, **caractérisé en ce qu'**un encollage selon l'une des revendications 1 à 6, dilué à l'eau, est pulvérisé sur les fibres dans la hotte de fibrage et de réception desdites fibres de verre.

9. Application du procédé selon la revendication 7 à l'obtention de produits isolants dont la densité est comprise entre 4 et 30 kg/$m^3$.

## Patentansprüche

1. Schmälze für Glasfasern für Dämmzwecke, auf Basis eines in Wasser dispergierbaren Epoxidharzes vom Glycidylether-Typ, einem aminierten Härter, dessen Flammpunkt über 180°C liegt und Additiven (berechnet in Teilen auf 100 Teile trockenes Harz), insbesondere 0,1 bis 2% Silan und 0 bis 15% Mineralöl.

2. Schmälze nach Anspruch 1, dadurch gekennzeichnet, daß das Epoxidharz ein Glycidylether mit einem Polymerisationsindex n unterhalb von 1 und beborzugt unterhalb von 0,2 ist.

3. Schmälze nach Anspruch 2, dadurch gekennzeichnet, daß der Polymerisationsindex n ausnahmlos über 0 liegt.

4. Schmälze nach einem der Ansprüche 1 bis 3, dadurch gekennzeichnet, daß die Molmassenäquivalente NH dem Härters unterhalb von 100 g liegen.

5. Schmälze nach einem der Ansprüche 1 bis 4, dadurch gekennzeichnet, daß der Härter dem Epoxidharz in einem Verhältnis zugegeben ist, welches in etwa dem stöchiometrischen Verhältnis entspricht.

6. Schmälze nach einem der Ansprüche 1 bis 5, dadurch gekennzeichnet, daß das Paar Harz-Härter eine Gelzeit oberhalb von 25 Minuten aufweist.

7. Schmälze nach einem der Ansprüche 1 bis 6, dadurch gekennzeichnet, daß der Härter auf Basis von Dicyanamid (DCN) ist.

8. Verfahren zum Behandeln von Glasfasern für Dämmzwecke, welche erhalten werden nach einem aerodynamischen Verfahren unter Ausziehen mittels Gasströmen bei hoher Temperatur, dadurch gekennzeichnet, daß eine mit Wasser Verdünnte Schmälze nach einem der Ansprüche 1 bis 6 in dem Fallschacht zur Faserbildung und -ablage auf die Fasern aufgesprüht wird.

9. Verwendung des Verfahrens nach Anspruch 7 zum Erhalten von Dämmprodukten, deren Dichte zwischen 4 und 30 $kg/m^3$.

## Claims

1. A size for so-called insulating glass fibres and based on an epoxy resin of the glycidyl ether type which can be dispersed in water, an amino hardener having a flash point greater than 180°C and additives (in parts calculated per 100 parts of dry resin) in particular 0.1 to 2% silane and 0 to 15% of a mineral oil.

2. A size according to Claim 1, characterised in that the epoxy resin is a glycidyl ether with a polymerisation index n which is less than 1 and preferably less than 0.2.

3. A size according to Claim 2, characterised in that the polymerisation index n is strictly greater than 0.

4. A size according to one of Claims 1 to 3, characterised in that the equivalent molar mass NH of the hardener is less than 100 g.

5. A size according to one of Claims 1 to 4, characterised in that the hardener is added to the epoxy resin in a ratio which is substantially identical to the stoichiometric ratio.

6. A size according to one of Claims 1 to 5, characterised in that the resin-hardener pairing has a gel time of greater than 25 minutes.

7. A size according to one of Claims 1 to 6, characterised in that the hardener is based on dicyano-diamide (DCN).

8. A method of treating so-called insulating glass fibres obtained according to aerodynamic processes entailing drawing by means of high temperature gas flows, characterised in that a size according to one of Claims 1 to 6, diluted with water, is sprayed onto the fibres in the container for producing and receiving the said glass fibres.

9. Application of the method according to Claim 7 to the making of insulating products having a density of between 4 and 30 $kg/m^3$.